# EUROPÄISCHE PATENTSCHRIFT

(11) **EP 2 522 831 B1**
(45) Veröffentlichungstag und Bekanntmachung des Hinweises auf die Patenterteilung: **21.10.2015**
(21) Anmeldenummer: 12003733.8
(22) Anmeldetag: 10.05.2012
(51) Int. Cl.: F02C 7/14, F02K 1/72, B64D 33/10

(54) **Fluggasturbinentriebwerk mit Ölkühler in der Triebwerksverkleidung**
Turbojet engine with oil cooler in the engine nacelle
Moteur d'aéronef avec refroidisseur d'huile dans la nacelle de la turbine à gaz

(30) Priorität: 12.05.2011 DE 102011101342
(43) Veröffentlichungstag der Anmeldung: 14.11.2012
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Hoefer & Partner Patentanwälte mbB

(56) Entgegenhaltungen:
- EP-A2- 1 944 475
- EP-A2- 2 009 260
- EP-A2- 2 011 988
- EP-A2- 2 243 945
- WO-A2-2010/136710
- GB-A- 2 234 805
- US-A1- 2007 044 451
- US-A1- 2009 301 057

## Beschreibung

Die Erfindung bezieht sich auf ein Fluggasturbinentriebwerk mit einem Kemtriebwerk, welches von einem Nebenstromkanal umgeben ist. Der Nebenstromkanal wird durch eine radial äußere Triebwerksverkleidung umschlossen, an deren hinterem Bereich eine Schubumkehrvorrichtung vorgesehen ist, welche relativ zu der Triebwerksverkleidung bewegbar ist.

Aus dem Stand der Technik ist es bekannt, Wärmetauscher entweder an dem Kerntriebwerk oder an dem Gehäuse des Fans oder im Bereich von Streben im Nebenstromkanal anzubringen. Hierbei ist es bekannt, entweder Matrixkühler mit einer Vielzahl von Durchströmungskanälen oder Oberflächenkühler mit einer vergrößerten Oberfläche zu verwenden.

Die aus dem Stand der Technik bekannten Konstruktionen erfordern jeweils eine Anpassung der Abmessungen des Gehäuses, wobei dieses wegen der Ölkühler vielfach axial verlängert werden muss. Dies führt in nachteiliger Weise zu höherem Gewicht und behindert die Zugänglichkeit zu radial innen liegenden Baugruppen. Die Verwendung von Kühlern im Gehäuse des Fans oder im Bereich von Streben oder Leitschaufeln im Nebenstromkanal beeinträchtigt die Ausgestaltung von Schubumkehr-Kaskaden und erweist sich auch aus diesem Grunde als ungünstig.

Weiterhin ergibt sich bei den aus dem Stand der Technik bekannten Konstruktionen der Nachteil, dass moderne Gasturbinentriebwerke mit einem hohen Nebenstromverhältnis größere Ölkühler und Wärmetauscher benötigen, welche bei den bekannten Konstruktionen nicht oder nur mit hohem Aufwand installiert werden können, da der erforderliche Bauraum nicht oder nur beschränkt verfügbar ist.

Die bekannten Konstruktionen zeichnen sich somit durch ein hohes Gewicht, vergrößerte Baugrößen und konstruktive Nachteile aus.

Ein allgemeiner Stand der Technik, welcher Fluggasturbinentriebwerke mit Schubumkehrvorrichtungen und mit Wärmetauschern offenbart, ergibt sich aus US 2009/301057 A1, GB 2 234 805 A, US 2007/044451 A1, EP 2 011 988 A1 und EP 1 944 475 A2. Die EP 2 243 945 A2 zeigt einen Stand der Technik gemäß dem Oberbegriff des Anspruchs 1.

Der Erfindung liegt die Aufgabe zugrunde, ein Fluggasturbinentriebwerk der eingangs genannten Art zu schaffen, welches bei einfachem Aufbau und einfacher, kostengünstiger Herstellbarkeit in effektiver Weise mit einem Wärmetauscher bzw. Ölkühler und/oder Pre-Cooler (Air Cooled Air Cooler) versehen werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass in einem Zwischenbereich zwischen der einströmseitigen Triebwerksverkleidung und der Schubumkehrvorrichtung zumindest ein sich über zumindest über einen Teil des Umfanges erstreckendes Kühlerelement (Wärmetauscher, Ölkühler) angeordnet ist.

Die erfindungsgemäße Konstruktion zeichnet sich durch eine Reihe erheblicher Vorteile aus. Zunächst ist es möglich, das Kühlerelement im Wesentlichen ringförmig auszubilden, so dass dieses ein großes Volumen und eine große Wärmeübergangskapazität aufweisen kann. Hierdurch unterscheidet sich die vorliegende Erfindung erheblich von den aus dem Stand der Technik bekannten Lösungen, welche jeweils singuläre Kühlerelemente vorsehen.

Ein weiterer, wesentlicher Vorteil besteht darin, dass das erfindungsgemäße Kühlerelement an einem Zwischenbereich zwischen der Schubumkehrvorrichtung und der vorderen Triebwerksverkleidung angeordnet ist. Im Flugzustand, bei welchem die Schubumkehrvorrichtung nicht aktiviert ist, ergibt sich stets die Thematik, dass eine Restströmung zwischen der Triebwerksverkleidung und der Schubumkehrvorrichtung radial nach außen aus dem Nebenstromkanal ausströmt. Erfindungsgemäß kann diese Strömung somit zum Wärmeaustausch verwendet werden, da das erfindungsgemäße Kühlerelement in diesem Bereich der austretenden Luftströmung angeordnet ist. Durch geeignete Maßnahmen ist es möglich, im Flugzustand eine sehr effektive Kühlung durchzuführen, wobei die aus dem Nebenstromkanal abgeführte Luftmenge durch die Ausgestaltung des Spaltes zwischen der Triebwerksverkleidung und der Schubumkehrvorrichtung exakt vorgegeben werden kann. Die erfindungsgemäße Lösung zeichnet sich somit durch einen hohen Wirkungsgrad aus, welcher insbesondere bei modernen Triebwerkskonstruktionen, welche einen hohen Kühlbedarf haben, sehr vorteilhaft ist. Derartige Triebwerkskonstruktionen weisen beispielsweise einen über ein Getriebe angetriebenen Fan oder zusätzliche elektrische Aggregate aus.

Erfindungsgemäß ist es besonders günstig, wenn das Kühlerelement am Abströmbereich der Triebwerksverkleidung angeordnet ist. Hierdurch ergibt sich auch bei aktivierter Schubumkehrvorrichtung eine wirkungsvolle Durchströmung des Kühlerelements. Zusätzlich kann es vorteilhaft sein, das Kühlerelement mit zumindest einem Luftleitelement zu versehen, welches die Luftströmung auch bei aktivierter Schubumkehrvorrichtung wirksam durch das Kühlerelement oder an dessen Oberfläche führt.

Durch die erfindungsgemäße Anordnung des Kühlerelements an einer radial sehr weit außen liegenden Position im Bereich der Triebwerksverkleidung ist es möglich, dieses mit einem geringeren Querschnitt zu versehen, so dass die Baugröße insgesamt reduziert werden kann, ohne den Wärmeaustausch zu beeinträchtigen.

Weiterhin ist es günstig, dass die Positionierung des erfindungsgemäßen Kühlerelements hinsichtlich der auftretenden Drücke optimiert ist. Dies bedeutet, dass sich an der radial äußeren Oberfläche der Triebwerksverkleidung (nacelle) ein geringster statischer Druck ergibt, während in diesem Bereich der Druck in dem Nebenstromkanal, insbesondere auch bedingt durch die stromab vorgesehene düsenförmige Ausgestaltung des Nebenstromkanals, hoch ist.

Die Anordnung des erfindungsgemäßen Kühlerelements und dessen Integration im Bereich von Schubumkehrkaskaden führt weiterhin zu dem vorteilhaften Effekt, dass Strömungsleitelemente der Kaskaden als Führungskanäle und Dichtungselemente für das Kühlerelement genutzt werden können, wenn die Schubumkehrvorrichtung sich in der deaktivierten Position befindet.

Ein weiterer Vorteil ergibt sich daraus, dass das Kühlerelement für Wartungsarbeiten gut zugänglich ist, wenn die Schubumkehrvorrichtung aktiviert ist.

Erfindungsgemäß ist es somit möglich, sehr große Kühlerelemente mit einem hohen Wirkungsgrad vorzusehen, welche insbesondere für Gasturbinentriebwerke mit einem über ein Getriebe angetriebenen Fan und/oder zusätzlichen elektrischen Aggregaten besonders geeignet sind. Erfindungsgemäß ergibt sich eine vollständige Integration des Kühlerelements in die Kaskadenkonstruktion der Schubumkehrvorrichtung. Durch die erfindungsgemäße Ausgestaltung werden andere Teilbereiche des Gasturbinentriebwerkes, welche bisher mit Kühlerelementen (Wärmetauschern, Ölkühlern etc.) belegt waren, für andere konstruktive Aufgaben frei.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Detail-Ansicht des erfindungsgemäßen Kühlerelements als doppelt wirkender Oberflächenwärmetauscher,
- Fig. 3: eine Ansicht, analog Fig. 2, mit Ausgestaltung des Kühlerelements als Matrix-Wärmetauscher,
- Fig. 4: vereinfachte Darstellungen, analog Fig. 2, im deaktivierten Zustand (oben) und aktivierten Zustand (unten) des Schubumkehrelements (TRU),
- Fig. 5: eine Ansicht, analog Fig. 4, des in Fig. 3 dargestellten Matrix-Wärmetauschers,
- Fig. 6: eine Detailansicht, analog Fig. 2, des doppelten Oberflächenwärmetauschers im aktivierten Zustand der Schubumkehrvorrichtung, und
- Fig. 7: eine Darstellung, analog Fig. 6, mit einem Matrix-Wärmetauscher.

In der nachfolgenden Beschreibung werden bei den unterschiedlichen Ausführungsbeispielen gleiche Teile mit gleichen Bezugsziffern versehen. Weiterhin sind die Begriffe Kühlerelement, Wärmetauscher und Ölkühler jeweils als gleichwertig betrachtet.

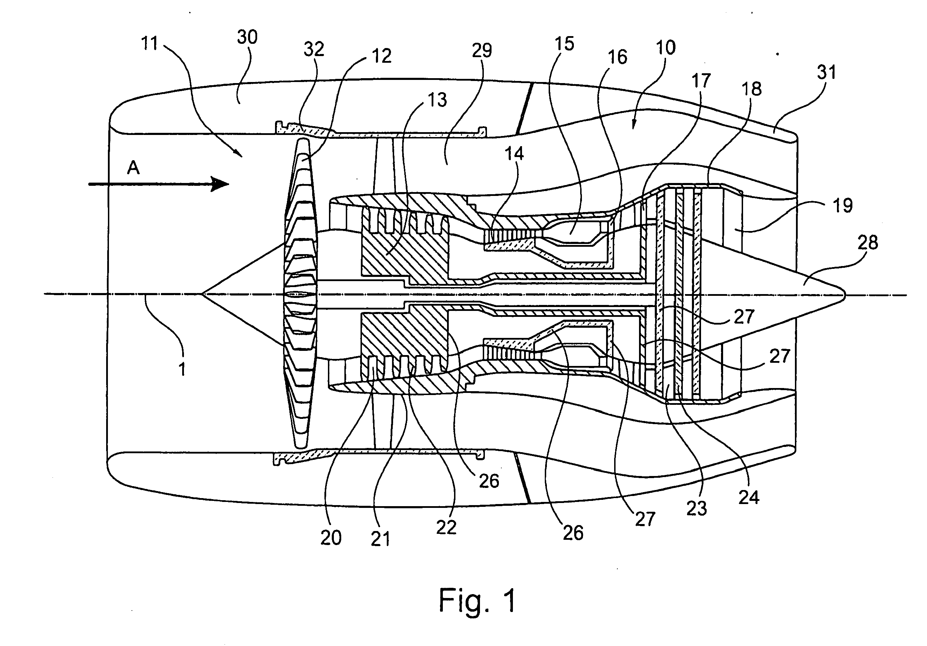

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Mit dem Bezugszeichen 28 ist ein Auslasskonus bezeichnet. Weiterhin zeigt Fig. 1 einen Nebenstromkanal 29 sowie eine Triebwerksverkleidung 30, die insbesondere den Einströmbereich (Lufteinlass) 11 umgibt. Eine Schubumkehrvorrichtung ist schematisch mit dem Bezugszeichen 31 dargestellt. Das Bezugszeichen 32 zeigt ein Fangehäuse.

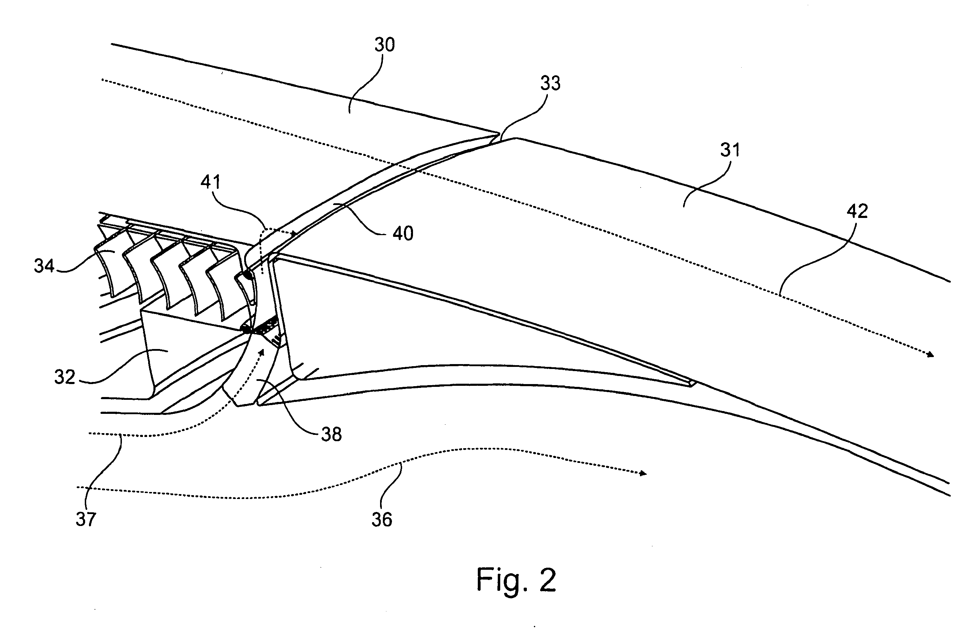

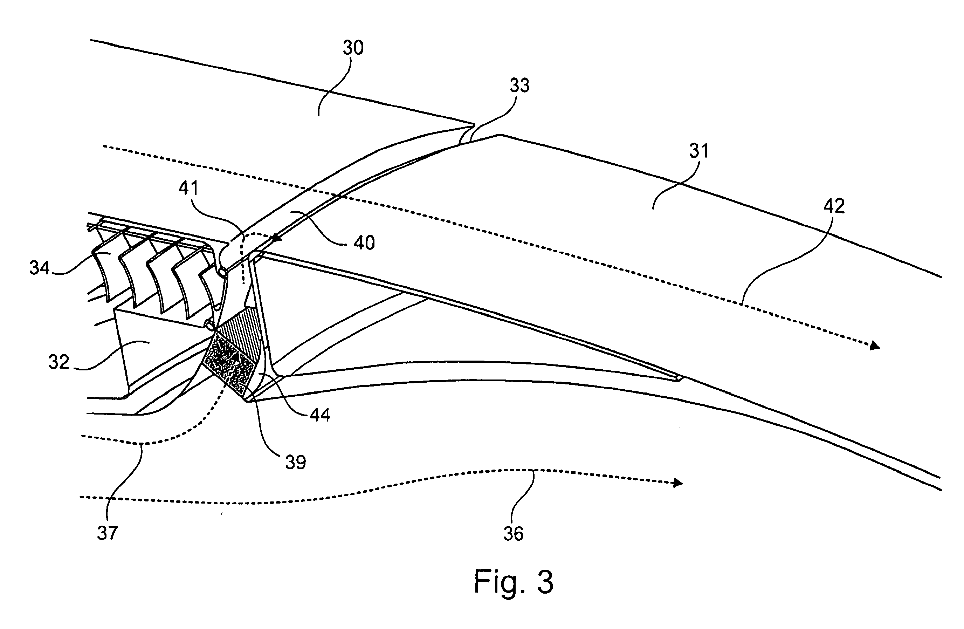

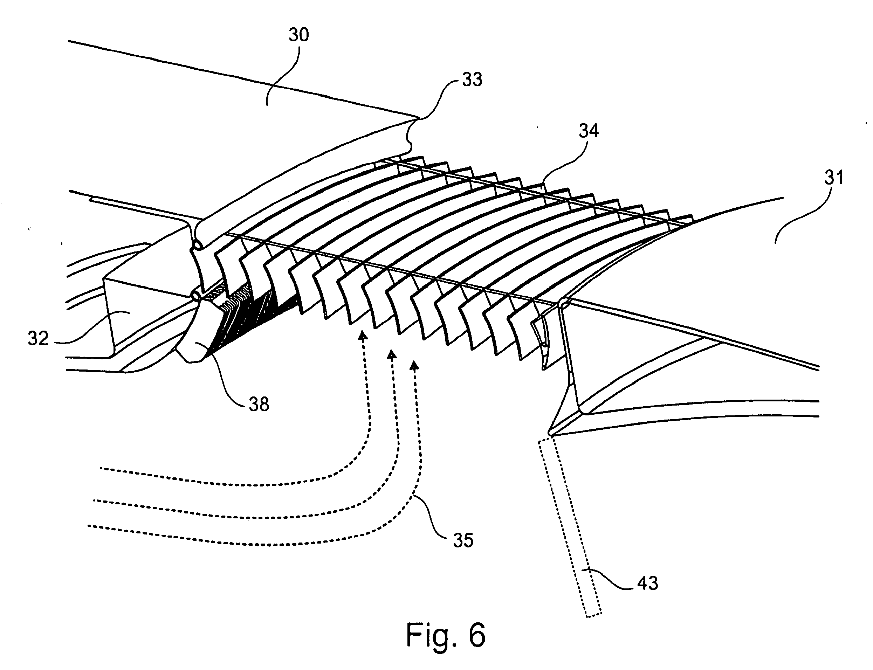

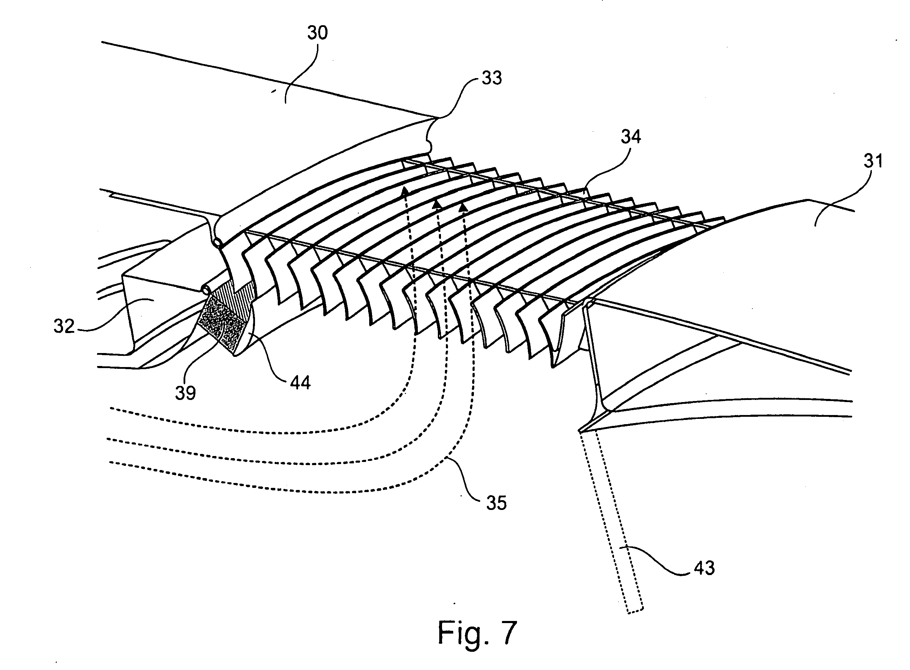

Die Fig. 2 und 3 zeigen in perspektivischer Teilansicht den abströmseitigen Bereich der Triebwerksverkleidung 30 mit einer Abströmkante 33. An diese schließt sich in Strömungsrichtung die Schubumkehrvorrichtung 31 an, welche, wie aus dem Stand der Technik bekannt, Kaskaden 34 aufweist, welche im aktivierten, in Axialrichtung nach hinten verschobenen Zustand der Schubumkehrvorrichtung 31 als Strömungsleitelemente für eine Schubumkehrströmung 35 dienen (siehe Fig. 6 und 7).

Die Fig. 2 und 3 zeigen weiterhin eine Nebenstromkanal-Strömung 36 im deaktivierten, geschlossenen Zustand der Schubumkehrvorrichtung 31 sowie eine Wärmetauscher-Einlassströmung 37, welche aus dem Nebenstromkanal 29 abgeleitet wird. Die Wärmetauscher-Einlassströmung 37 durchströmt einen doppelten Oberflächenwärmetauscher 38 (Fig. 2) und in einem alternativen Ausführungsbeispiel einen Matrix-Wärmetauscher 39 (Fig. 3). Die Wärmetauscher 38, 39 bilden dabei Kühlerelemente, sie werden (nicht dargestellt) von Ölkanälen durchströmt, um das Öl zu kühlen. Alternativ hierzu ist es erfindungsgemäß auch möglich, andere Medien durch die Kühlerelemente 38, 39 zu kühlen.

Die Kühlerelemente 38, 39 sind in einem Spalt 40 angeordnet, durch welchen die Wärmetauscher-Einlassströmung als Wärmetauscher-Auslassströmung 41 ausströmt (Fig. 2 und 3). Die Wärmetauscher-Auslassströmung 41 vermischt sich nachfolgend mit einer Triebwerksverkleidungs-Außenströmung 42.

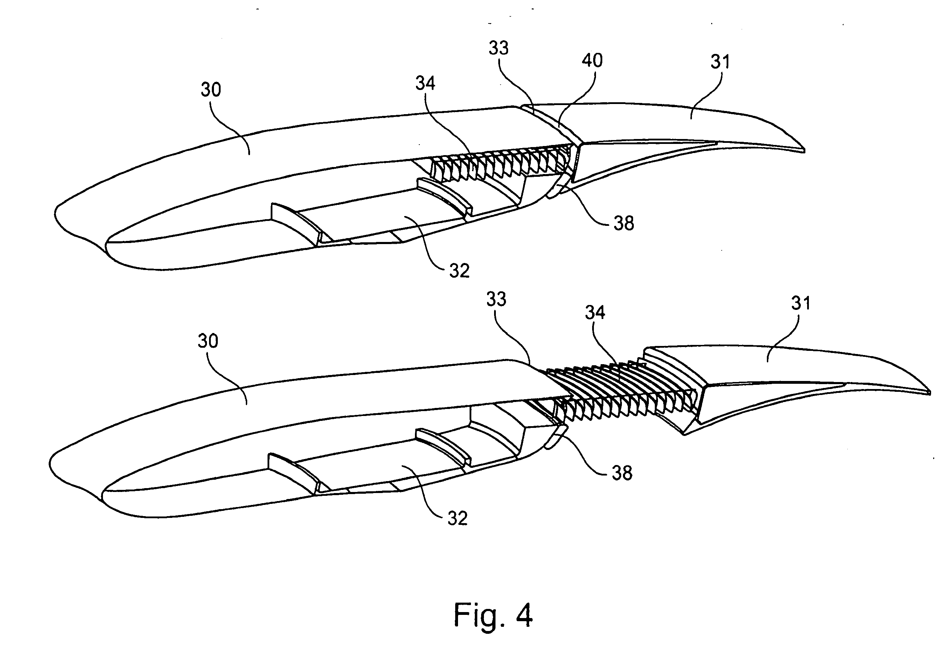

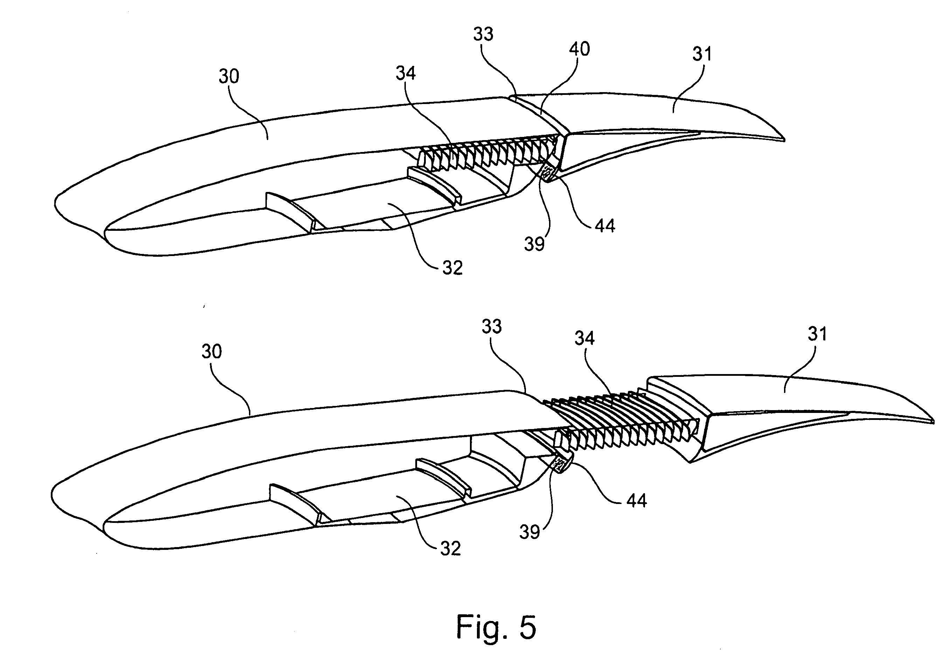

Die oberen Darstellungen in den Fig. 4 und 5 zeigen in vollständigerer Ansicht die Situationen der Fig. 2 bzw. 3. Die unteren Darstellungen der Fig. 4 und 5 zeigen die Situationen bei aktivierter Schubumkehrvorrichtung 31, bei welcher die Kaskaden 34 strömungswirksam ausgefahren sind, so wie dies in den Fig. 6 und 7 dargestellt ist. Dabei ist erkennbar, dass die Schubumkehrströmung 35, welche insbesondere durch Schubumkehrtüren 43 umgeleitet und durch die Kaskaden 34 nach außen abgeführt wird, in wirkungsvoller Weise das Kühlerelement 38 bzw. 39 durchströmt. Insbesondere bei dem in Fig. 7 dargestellten Matrix-Wärmetauscher 39 kann ein zusätzliches Strömungsleitelement 44 vorgesehen sein, um die Durchströmung des Matrix-Wärmetauschers zu verstärken.

### Bezugszeichenliste:

- 1: Triebwerksachse
- 10: Gasturbinentriebwerk / Kerntriebwerk
- 11: Lufteinlass / Einströmbereich
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Nebenstromkanal
- 30: Triebwerksverkleidung
- 31: Schubumkehrvorrichtung
- 32: Fangehäuse
- 33: Abströmkante / Abströmbereich
- 34: Kaskade
- 35: Schubumkehrströmung
- 36: Nebenstromkanal-Strömung
- 37: Wärmetauscher-Einlassströmung
- 38: doppelter Oberflächen-Wärmetauscher /-Kühlerelement
- 39: Matrix-Wärmetauscher / -Kühlerelement
- 40: Spalt / Zwischenbereich
- 41: Wärmetauscher-Auslassströmung
- 42: Triebwerksverkleidungs-Außenströmung
- 43: Schubumkehrtür
- 44: Strömungsleitelement

## Patentansprüche

1. Fluggasturbinentriebwerk mit einem Kerntriebwerk (10), welches von einem Nebenstromkanal (29) umgeben ist, wobei eine radial äußere, den Nebenstromkanal (29) umschließende Triebwerksverkleidung (30) an ihrem hinteren Bereich mit einer Schubumkehrvorrichtung (31) versehen ist, welche relativ zu der Triebwerksverkleidung (30) bewegbar ist, **dadurch gekennzeichnet, dass** in einem Zwischenbereich (40) zwischen der Triebwerksverkleidung (30) und der Schubumkehrvorrichtung (31), durch welchen ein Teil der Strömung des Nebenstromkanals (29) radial nach außen aus dem Nebenstromkanal (29) strömt, zumindest ein sich zumindest über einen Teil des Umfangs erstreckendes Kühlerelement (38, 39) angeordnet ist.

2. Fluggasturbinentriebwerk nach Anspruch 1, **dadurch gekennzeichnet, dass** das Kühlerelement (38, 39) als Oberflächenkühler und/oder als Matrix-Kühler ausgebildet ist.

3. Fluggasturbinentriebwerk nach einem der Ansprüche 1 oder 2, **dadurch gekennzeichnet, dass** das Kühlerelement (38, 39) an der Triebwerksverkleidung (30), welche ein Gehäuse (32) eines Fans (12) bildet, gelagert ist.

4. Fluggasturbinentriebwerk nach einem der Ansprüche 1 bis 3, **dadurch gekennzeichnet, dass** das Kühlerelement (38, 39) am Abströmbereich (33) der Triebwerksverkleidung (30) angeordnet ist.

5. Fluggasturbinentriebwerk nach einem der Ansprüche 1 bis 4, **dadurch gekennzeichnet, dass** das Kühlerelement (38, 39) mit zumindest einem Strömungsleitelement (44) versehen ist.

## Claims

1. Aircraft gas-turbine engine having a core engine (10) surrounded by a bypass duct (29), with a radially outer engine cowling (30) enclosing the bypass duct (29) being provided at its rear region with a thrust-reversing device (31) which is moveable relative to the engine cowling (30), **characterized in that** at least one cooler element (38, 39) extending over at least part of the circumference is arranged in an intermediate area (40) between the engine cowling (30) and the thrust-reversing device (31), through which area part of the flow of the bypass duct (29) passes radially outwards out of the bypass duct (29).

2. Aircraft gas-turbine engine in accordance with Claim 1, **characterized in that** the cooler element (38, 39) is designed as surface cooler and/ or matrix cooler

3. Aircraft gas-turbine engine in accordance with one of the Claims 1 or 2, **characterized in that** the cooler element (38, 39) is mounted on the engine cowling (30) which forms a casing (32) of a fan (12).

4. Aircraft gas-turbine engine in accordance with one of the Claims 1 to 3, **characterized in that** the cooler element (38, 39) is arranged at the outflow region (33) of the engine cowling (30).

5. Aircraft gas-turbine engine in accordance with one of the Claims 1 to 4, **characterized in that** the cooler element (38, 39) is provided with at least one flow-guiding element (44).

## Revendications

1. Moteur d'avion à turbine à gaz comprenant un moteur de base (10) qui est entouré par un canal de flux secondaire (29), sachant qu'un carénage de moteur (30) extérieur dans le sens radial enveloppant le canal de flux secondaire (29) est muni dans sa zone arrière d'un inverseur de poussée (31) mobile par rapport au carénage de moteur (30), **caractérisé en ce qu'**au moins un élément refroidisseur (38, 39) s'étendant au moins sur une partie de la circonférence est disposé dans une zone intermédiaire (40) entre le carénage de moteur (30) et l'inverseur de poussée (31), zone à travers laquelle s'écoule une partie du flux du canal de flux secondaire (29) radialement vers l'extérieur en sortant du canal de flux secondaire (29).

2. Moteur d'avion à turbine à gaz selon la revendication n° 1, **caractérisé en ce que** l'élément refroidisseur (38, 39) est conçu en tant que refroidisseur à surface et/ ou refroidisseur matriciel.

3. Moteur d'avion à turbine à gaz selon une des revendications n° 1 ou n° 2, **caractérisé en ce que** l'élément refroidisseur (38, 39) est logé sur le carénage de moteur (30), ledit carénage formant un carter (32) d'une soufflante (12).

4. Moteur d'avion à turbine à gaz selon une des revendications n° 1 à n° 3, **caractérisé en ce que** l'élément refroidisseur (38, 39) est disposé dans la zone d'évacuation (33) du carénage de moteur (30).

5. Moteur d'avion à turbine à gaz selon une des revendications n° 1 à n° 4, **caractérisé en ce que** l'élément refroidisseur (38, 39) est muni d'au moins un élément de guidage de flux (44).
